# EUROPEAN PATENT APPLICATION

(11) **EP 4 778 613 A1**
(43) Date of publication of application: **22.07.2026**
(21) Application number: 25162599.2
(22) Date of filing: 10.03.2025
(51) Int. Cl.: B01D 46/10, F24F 3/16, F24F 7/06

(54) **AIR PURIFIER**

(30) Priority: 17.01.2025 CN 202520126747 U
(71) Applicant: Versuni Holding B.V., 1082 MD Amsterdam (NL)
(72) Inventor: WEI, Zhang, 1082 MD Amsterdam (NL); SHEN, Yingdan, 1082 MD Amsterdam (NL)
(74) Representative: Vollering, Stefanus Franciscus Maria

(57) **Abstract**

The present disclosure relates to an air purifier, including: a base body (20) including an air channel and a fan (36) mounted in the air channel; a filter (34); and a hair collecting device (40) including a movable hair collecting member (42), where the hair collecting member (42) is arranged near the bottom of a prefilter (32) and configured to be movable between a first position and a second position; at the first position, the hair collecting member (42) blocks an air inlet (122) at the bottom of the prefilter (32) to prevent hair collected on the prefilter (32) from falling onto the ground through the air inlet (122) at the bottom of the prefilter (32); and at the second position, the hair collecting member (42) opens the air inlet (122) at the bottom of the prefilter (32) to allow an air flow to enter the prefilter (32) through the air inlet (122) at the bottom of the prefilter (32).

## Description

### FIELD OF TECHNOLOGY

Embodiments of the present disclosure generally relate to an air purifier.

### BACKGROUND

Air purifiers, especially the air purifiers for pets, are widely used in hair-rich places such as homes and animal hospitals. The air purifier is usually provided with a filter and a prefilter (such as a filter screen). After the air purifier is used for a period of time, hair collected by the air purifier should be removed periodically. The traditional air purifiers are not satisfactory in some aspects, for example, they are large in size, complex in structure and high in manufacturing cost. There is a need for further improvement of the air purifiers.

### SUMMARY

Embodiments of the present disclosure provides an air purifier, which aims to solve one or more of the above problems.

According to the first aspect of the present disclosure, an air purifier is provided. The air purifier includes: a base body including an air channel and a fan mounted in the air channel; a filter mounted in the air channel; a prefilter mounted upstream of the filter and configured to prevent hair of a pet from entering the filter; and a hair collecting device including a movable hair collecting member, where the hair collecting member is arranged near the bottom of the prefilter and configured to be movable between a first position and a second position; at the first position, the hair collecting member blocks an air inlet at the bottom of the prefilter to prevent the hair collected on the prefilter from falling onto the ground through the air inlet at the bottom of the prefilter; and at the second position, the hair collecting member opens the air inlet at the bottom of the prefilter to allow an air flow to enter the prefilter through the air inlet at the bottom of the prefilter.

In some embodiments, the hair collecting member is pivotally arranged near the bottom of the prefilter and configured such that when the fan operates, the hair collecting member pivots, by means of a suction force generated during operation of the fan, from the first position to the second position, and when the fan stops operating, the hair collecting member pivots, by means of the own gravity of the hair collecting member, to return to the first position from the second position.

In some embodiments, the hair collecting member can be shaped as a plate-shaped member.

In some embodiments, the hair collecting device can further include a limiting device, and the limiting device is configured to limit rotation of the hair collecting member from the first position in a direction away from the second position after the hair collecting member returns to the first position from the second position.

In some embodiments, the air purifier can further include a front cover detachably mounted on the base body, where the base body includes an air channel upstream member at least partially defining the air channel; and a gap is provided between the front cover and the air channel upstream member and defines the air inlet for allowing the air flow to enter the air channel from an environment.

In some embodiments, the hair collecting member is pivotally mounted on the front cover.

In some embodiments, the base body can further include a base adjacent to the ground, and a bottom air inlet side edge of the air channel upstream member is arranged as close as possible to an air inlet side edge of the base such that the air inlet of the air channel is as close as possible to the ground, thereby facilitating air intake.

In some embodiments, the bottom air inlet side edge of the air channel upstream member can be arranged to overlap with the air inlet side edge of the base.

In some embodiments, the hair collecting member is pivotally mounted on the air channel upstream member.

In some embodiments, the base body can further include a base suitable to make contact with the ground, the base includes a support surface, and the air purifier is supported on the ground by means of the support surface of the base.

The air purifier according to the present disclosure can achieve one or more following effects: simplifying the structure of the hair collecting device; reducing the size of the air purifier; reducing the manufacturing cost of the air purifier; and improving the hair collecting performance.

### BRIEF DESCRIPTION OF THE DRAWINGS

The above and other objectives, features, and advantages of the embodiments of the present disclosure will become more apparent by reading the following detailed description with reference to the accompanying drawings. In the drawings, several embodiments of the present disclosure are illustrated using examples, which should not be considered limitations.
FIG. 1 illustrates an overall schematic diagram of an air purifier according to an embodiment of the present disclosure.
FIG. 2 illustrates a lateral section view of an air purifier according to an embodiment of the present disclosure.
FIG. 3 illustrates a structural schematic diagram of a prefilter of an air purifier according to an embodiment of the present disclosure.
FIG. 4 illustrates a three-dimensional schematic diagram of a hair collecting member at a closed position according to an embodiment of the present disclosure.
FIG. 5 illustrates a three-dimensional schematic diagram of a hair collecting member at an open position according to an embodiment of the present disclosure.

In the drawings, the same or corresponding numerals indicate the same or corresponding parts.

### DESCRIPTION OF THE EMBODIMENTS

Preferred embodiments of the present disclosure will be described in more detail below with reference to the accompanying drawings. While the preferred embodiments of the present disclosure are shown in the drawings, it should be understood that the present disclosure may be implemented in various forms and should not be limited to the embodiments set forth herein. On the contrary, these embodiments are provided to ensure that the present disclosure is clearer and more complete, and the scope of the present disclosure can be fully delivered to those skilled in the art.

As used herein, the term "include" and variations thereof indicate open-ended inclusion, i.e., "including but not limited to". Unless specifically stated, the term "or" indicates "and/or". The term "based on" indicates "at least partially based on". The terms "one exemplary embodiment" and "one embodiment" indicate "at least one exemplary embodiment". The term "another embodiment" indicates "at least one additional embodiment". Orientation or position relationships indicated by the terms such as "upper", "lower", "front", "rear" and the like are orientation or position relationships based on the drawings, are only for the purpose of facilitating the description of the principles of the present disclosure, and do not indicate or imply that the element referred to must have the specific orientation or be constructed or operated in the specific orientation. Therefore, they cannot be understood as limitations on the present disclosure.

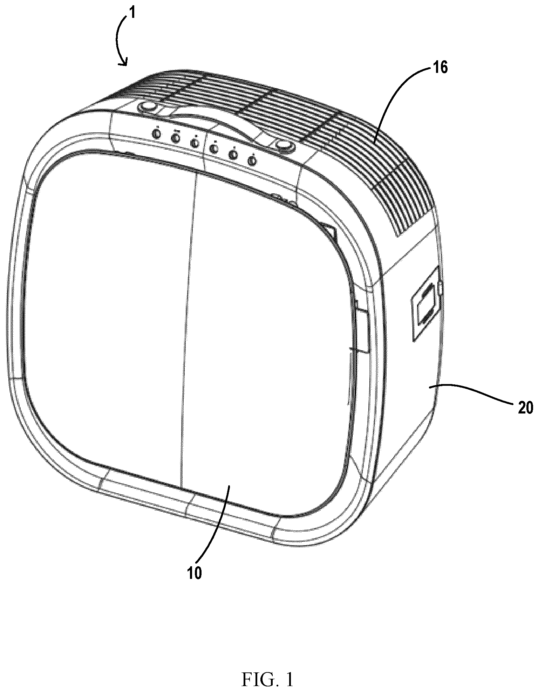

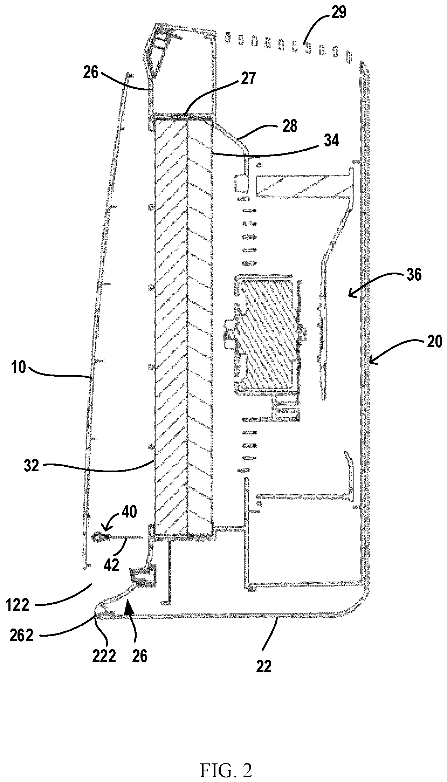

FIG. 1 illustrates an overall schematic diagram of an air purifier viewed from the front side according to an embodiment of the present disclosure. FIG. 2 illustrates a lateral section view of an air purifier viewed from a side according to an embodiment of the present disclosure.

As shown in FIG. 1 and FIG. 2, the air purifier 1 includes a front cover 10 and a base body 20. The base body 20 defines the overall frame structure of the air purifier 1 and defines an air channel. The air channel can be defined by one or more members of the base body 20. In some embodiments, these members can be integrally formed; and in other embodiments, these members can be assembled. In some embodiments, the base body 20 can include an air channel upstream member 26, an air channel midstream member 27 and a downstream member 28. The front cover 10 can be arranged spaced apart from the base body 20 (for example, the air channel upstream member 26), and a gap between the front cover 10 and the base body 20 can serve as an air inlet 122 for allowing an air flow to enter the air channel from an environment.

In some embodiments, the front cover 10 is detachably mounted on the base body 20. This is beneficial to removal of hair. As shown in FIG. 1, the front cover 10 can be provided with detachable connections such as a snap-fit locking member or a magnet, so that the front cover 10 can be conveniently dismounted and fastened.

The air purifier 1 further includes a prefilter 32, a filter 34 and a fan 36 which are arranged in the air channel. The prefilter 32 can be mounted upstream of the filter 34, and is configured to preliminarily filter sundries such as large particles and hair in the air flow flowing in the air channel. In some embodiments, as shown in FIG. 2, the prefilter 32 and the filter 34 can be mounted on the base body 20 (for example, at the air channel midstream member 27), and can be arranged across the air channel. The fan 36 can, for example, be mounted to the base body 20 at the downstream member 28. An air outlet 29 can also be arranged at an outlet of the downstream member 28.

The prefilter 32 plays an important role in prolonging the service life of the air purifier. Sundries such as the hair in the air can be preliminarily filtered through the prefilter, and the prefilter is periodically cleaned or replaced to ensure that the rear filter can function for a long time. The characteristics of the hair are greatly different from those of objects such as dust and the large particles, the hair is very soft and fine, and compared with the dust or the large particles, the hair is more easily accumulated on the prefilter and can more easily block the prefilter.

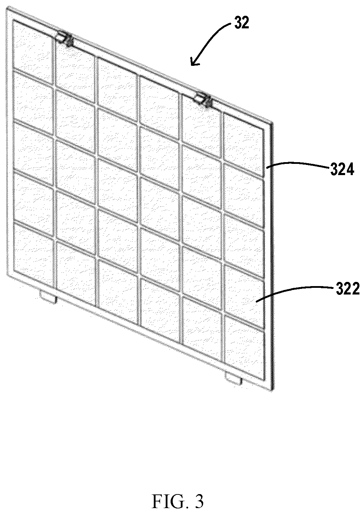

The prefilter 32 can be implemented in various forms. FIG. 3 illustrates an embodiment of the prefilter 32 as an example. The prefilter 32 can include a silk screen 322 with meshes in predetermined sizes, and the meshes in the appropriate sizes can be selected according to application scenes. The silk screen 322 can be supported through a frame 324. The prefilter 32 is mounted at an appropriate position upstream of the filter 34. In the embodiments as shown in FIG. 1 and FIG. 2, the prefilter 32 is mounted next to the filter 34. It should be understood that these embodiments are only exemplary, and the prefilter 32 can be arranged at any other appropriate position upstream of the filter 34.

The filter 34 is mounted in the air channel to filter gases in the air channel. The filter 34 can include a filter element, which can be an adsorbing material, for example, activated carbon. In some embodiments, the filter can include a chemical adsorbing substance, thereby removing odors such as ammonia gas and methyl mercaptan.

The fan 36 is configured as a power component to build a negative pressure in the air channel. The fan 36 can include a fan impeller, which rotates to provide power for air flowing. When the fan 36 operates, the air can enter the air channel through the air inlet 122 and sequentially passes through the prefilter 32 and the filter 34, and the filtered fresh air finally flows out of the air purifier through the air outlet 29. In the embodiment as shown in FIG. 2, the air inlet 122 is shown to be arranged around the front cover 10 of the air purifier 1. In the embodiment as shown in the drawing, large gaps between two transverse sides and upper and lower sides of the front cover 10 and the base body 20 all serve as air inlets. Such large gaps are beneficial to improvement of the performance of the air purifier. This is because that if the air inlets are formed as small holes or small hole arrays, the fine hair will be very easily attracted to the small holes and then block the air inlets, which increases the air flow resistance and influences the air output efficiency of the air purifier. The air inlets are formed by using the large gaps, thereby effectively preventing the hair from being accumulated at the air inlets. In the embodiment as shown in the drawing, the air outlet 29 is shown to be located on the upper side of the air purifier 1. It should be understood that this embodiment is only exemplary, and the air outlet 29 can be located at any other appropriate position of the air purifier 1.

According to the present disclosure, as shown in FIG. 2, the air purifier 1 can further include a hair collecting device 40. The hair collecting device 40 includes a movable hair collecting member 42. The hair collecting member 42 is arranged near the bottom of the prefilter 32 and configured to be movable between a first position and a second position. The hair collecting member 42 can be shaped appropriately to form a hair storage cavity together with the front cover 10 and the prefilter 32. The hair collecting member 42 can move between the first position and the second position to selectively open or close the hair storage cavity. In some embodiments, as shown in FIG. 2, the hair collecting member 42 is shaped as a plate-shaped member and extends across the air inlet 122. It should be understood that the embodiments as shown in the drawing are only exemplary, and the hair collecting member 42 can also be formed in other appropriate shapes.

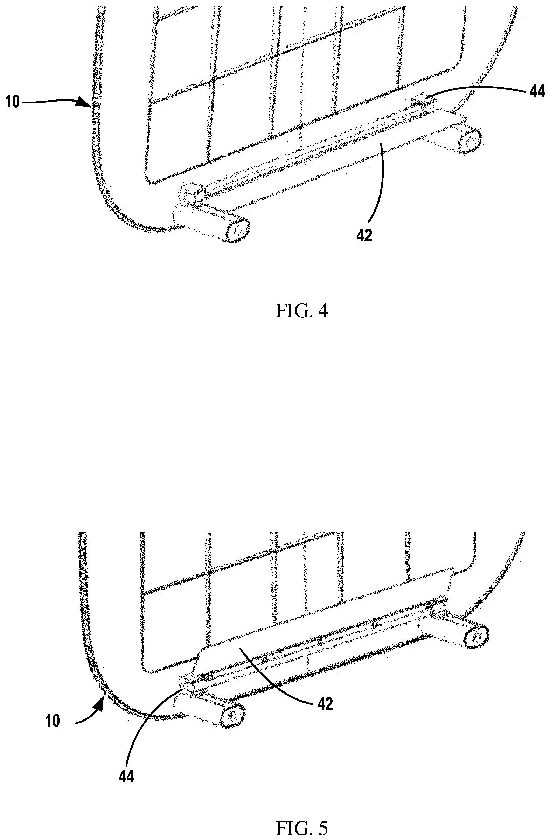

FIG. 4 and FIG. 5 respectively illustrate three-dimensional schematic diagrams of the hair collecting member at a closed position and an open position according to embodiments of the present disclosure.

In the state as shown in FIG. 4, the hair collecting member 42 is located at the first position. The first position can correspond to a low-speed mode or an off state of the air purifier 1. The low-speed mode here means that while the air purifier 1 works, the negative pressure generated by the fan 1 is not sufficient to attract the hair collecting member 42 to a folding position. At the first position, the hair collecting member 42 is located in an unfolded position, and thus the hair collecting member 42 blocks the air inlet 122 at the bottom of the prefilter 32, thereby preventing the hair collected on the prefilter 32 from falling onto the ground through the air inlet 122 at the bottom of the prefilter 32.

In the state as shown in FIG. 5, the hair collecting member 42 is located at the second position. The second position can correspond to a hair-removal operation state of the air purifier 1. The hair collecting member 42 is located in a folded position, and thus the air inlet 122 at the bottom of the prefilter 32 is opened, thereby allowing the air flow to enter the prefilter 32 through the air inlet 122 at the bottom of the prefilter 32.

In an operation state of the fan 36, the hair collected inside the air purifier 1 is attached to a front side surface of the prefilter 32 under the negative pressure built by the fan 36. Besides, when the fan 36 stops operating or operates at a low speed, it means that the negative pressure environment of the air purifier 1 is removed, and the hair collected inside the air purifier 1 will fall off from the front side surface of the prefilter 32 under the action of the gravity of the hair. In such circumstance, if there is no hair collecting device, the hair will fall onto the ground through the gap (for example, the air inlet 122) at the bottom of the air purifier 1. According to the disclosure, the above phenomenon is conveniently prevented by controlling the posture of the hair collecting member 42. That is, when the fan 36 stops operating or operates at a low speed, the hair collected inside the air purifier 1 will fall onto the hair collecting member 42 under the action of the gravity of the hair, thereby implementing a hair collecting function. Considering the low cost and easiness in implementation of the hair collecting member 42, the hair collecting cost of the air purifier 1 can be greatly reduced. Besides, no complex hair collecting component needs to be arranged, so that the size of the air purifier 1 can be greatly reduced. This is particularly attractive in certain application scenes with constrained spaces.

In some embodiments, the hair collecting member 42 is pivotally arranged near the bottom of the prefilter 32. In some embodiments, as shown in FIG. 2, FIG. 4 and FIG. 5, the hair collecting member 42 is pivotally mounted on the front cover 10, for example, through matching of shaft holes. The front cover 10 can be provided with a mounting base 44, and the hair collecting member 42 can be mounted on the mounting base 44 through a shaft hole matching structure. It should be understood that the structures as shown in the drawings are only exemplary, and the hair collecting member 42 can be mounted on the front cover 10 in any appropriate manner.

In some embodiments, the mounting base 44 can be provided with a limiting device, and the limiting device is configured to limit rotation of the hair collecting member 42 from the first position in a direction away from the second position after the hair collecting member 42 returns to the first position from the second position. Thus, it can be ensured that the hair collecting member 42 stops at a predetermined design position.

In some embodiments, the movement of the hair collecting member 42 between the first position and the second position is not controlled by an electric motor, for example, the hair collecting member 42 can be moved by means of the gravity of the hair collecting member 42 and the negative pressure generated during operation of the fan. This can further simplify the structure for the hair collecting function. In such circumstance, the hair collecting member 42 needs to be manufactured as light as possible. The flat-plate-shaped structure according to the present disclosure has benefits in this aspect.

In some embodiments, when the fan 36 operates, the hair collecting member 42 rotates, by means of a suction force generated during operation of the fan 36, from the first position to the second position. When the fan 36 stops operating, the hair collecting member 42 rotates, by means of the gravity of the hair collecting member 42, to return from the second position to the first position. Thus, no additional driving component is needed, and the self-adaptive adjustment of the posture of the hair collecting member 42 can be realized. This can further reduce the cost of the air purifier 1.

When the fan 36 stops operating, even if the negative pressure is removed, the hair collecting member 42 is in the unfolded state, so that the attracted hair falls onto the hair collecting member 42 under the action of the gravity of the hair instead of falling onto the ground. When the fan 36 starts to operate, the hair collecting member 42 moves to the folded state under the negative pressure. Meanwhile, the hair collected on a top side of the hair collecting member 42 is attracted to the prefilter 32 again under the negative pressure, and cannot fall onto the ground due to the fact that the hair is not cleaned timely.

In some embodiments, after the air purifier 1 is used for a period of time, the front cover 10 can be periodically dismounted from the base body 20, so that the hair collected on the hair collecting member 42 can be manually removed. Thus, it is ensured that the collecting performance of the hair collecting member 42 cannot be affected due to the excessive hair accumulation.

In the embodiments as shown in FIG. 2, FIG. 4 and FIG. 5, the hair collecting member 42 is pivotally mounted on the front cover 10, which is only exemplary. In other embodiments (not shown), the hair collecting member 42 is pivotally mounted on the base 20, for example, the air channel upstream member 26 of the base 20 or any other appropriate member of the base. Thus, the inventive concept according to the present disclosure can also be implemented in a similar way.

In some embodiments, the position where the hair collecting member 42 is mounted on the base body 20 is set to not interfere with or affect the operation of the prefilter 32. As an example, the hair collecting member 42 can be arranged on the air channel upstream member 26 and is spaced apart from a bottom edge of the prefilter 32. In some embodiments, when the hair collecting member 42 is located at the open position, a top edge of the hair collecting member 42 is lower than the bottom edge of the prefilter 32 or is flush with the bottom edge of the prefilter 32.

In some embodiments, the air channel upstream member 26 is formed in a shape suitable for guiding the air flow. As shown in FIG. 2, the air channel upstream member 26 can be formed in a concave and curved shape, which helps to reduce the air flow resistance. In some embodiments, as shown in FIG. 2, viewing from a side surface of the air purifier, the concave and curved bending angle of the air channel upstream member 26 is an obtuse angle relative to a vertical direction.

In some embodiments, as shown in FIG. 2, the base body 20 further includes a base 22 adjacent to the ground. A bottom air inlet side edge 262 of the air channel upstream member 26 is arranged to be as close as possible to an air inlet side edge 222 of the base 22. In such circumstance, the air inlet 122 of the air channel can be as close as possible to the ground. This can increase the opening degree of the air inlet 122, which facilitates air inlet. In addition to reducing the air flow resistance, it also helps to make the air inlet 122 as close as possible to the ground, which has additional benefits to hair collection. In some embodiments, the bottom air inlet side edge 262 of the air channel upstream member 26 is arranged to overlap with the air inlet side edge 222 of the base 22. This makes the air inlet 122 arranged almost flush with the ground.

In some embodiments, the air purifier 1 does not include legs placed on the ground to support the air purifier. The legs are replaced by the base body which supports the air purifier 1, the base body 20 can include the base 22 adjacent to the ground, the base 22 can include a support surface, and the air purifier is supported by means of the support surface of the base 22 of the base body 20. Compared with the situation that the legs are arranged to support the overall weight of the air purifier 1, the height of the air purifier 1 can be further reduced when the air purifier 1 is supported by the support surface. This makes the air inlet 122 closer to the ground, and particularly, it is almost flush with the ground. This can effectively prevent the hair from being accumulated around the air purifier 1, thereby improving the hair collecting ability of the air purifier 1.

Although operations are described in a specific sequence, it should be understood as requiring such operations to be executed in the shown specific sequence or in sequence, or requiring the operations shown in all the drawings to be executed to obtain the expected result. In certain environments, multi-task and parallel processing may be advantageous. Similarly, although the above discussion includes several specific implementation details, these details should not be interpreted as limitations on the scope of the present disclosure. Certain features described in the context of individual embodiments can also be implemented in an individual implementation in a combined manner. On the contrary, various features described in the context of the individual implementation can also be implemented in multiple implementations individually or in any appropriate sub-combination.

Although the subject matter is described by language specific to structural features and/or method logic actions, it should be understood that the subject matter defined in the appended claims may not be limited to the above-described specific features or actions. On the contrary, the above-described specific features and actions are only exemplary forms for achieving the claims.

Various embodiments of the present disclosure have been described above, and the above description is exemplary rather than exhaustive, and is not limited to the disclosed embodiments. Many amendments and changes would have been apparent for those of ordinary skill in the art without departing from the scope and spirit of the described embodiments. The selection of terms used herein is intended to best explain the principles and practical applications of the various embodiments or the improvements to technologies on the market, or to enable other persons of ordinary skill in the art to understand the embodiments disclosed herein.

## Claims

1. An air purifier, **characterized by** comprising:
a base body (20) comprising an air channel and a fan (36) mounted in the air channel;
a filter (34) mounted in the air channel;
a prefilter (32) mounted upstream of the filter (34) and configured to prevent hair of a pet from entering the filter (34); and
a hair collecting device (40) comprising a movable hair collecting member (42), wherein the hair collecting member (42) is arranged near the bottom of the prefilter (32) and configured to be movable between a first position and a second position; at the first position, the hair collecting member (42) blocks an air inlet (122) at the bottom of the prefilter (32) to prevent the hair collected on the prefilter (32) from falling onto the ground through the air inlet (122) at the bottom of the prefilter (32); and at the second position, the hair collecting member (42) opens the air inlet (122) at the bottom of the prefilter (32) to allow an air flow to enter the prefilter (32) through the air inlet (122) at the bottom of the prefilter (32).

2. The air purifier according to claim 1, **characterized in that** the hair collecting member (42) is pivotally arranged near the bottom of the prefilter (32) and configured such that when the fan (36) operates, the hair collecting member (42) pivots, by means of a suction force generated during operation of the fan (36), from the first position to the second position, and when the fan (36) stops operating, the hair collecting member (42) pivots, by means of the own gravity of the hair collecting member (42), to return to the first position from the second position.

3. The air purifier according to claim 2, **characterized in that** the hair collecting member (42) is shaped as a plate-shaped member.

4. The air purifier according to claim 2, **characterized in that** the hair collecting device (40) further comprises a limiting device, and the limiting device is configured to limit rotation of the hair collecting member (42) from the first position in a direction away from the second position after the hair collecting member (42) returns to the first position from the second position.

5. The air purifier according to any one of claims 1 to 4, **characterized by** further comprising a front cover (10) detachably mounted on the base body (20), wherein the base body (20) comprises an air channel upstream member (26) at least partially defining the air channel; and
a gap is provided between the front cover (10) and the air channel upstream member (26) and defines the air inlet (122) for allowing the air flow to enter the air channel from an environment.

6. The air purifier according to claim 5, **characterized in that** the hair collecting member (42) is pivotally mounted on the front cover (10).

7. The air purifier according to claim 5, **characterized in that** the base body (20) further comprises a base (22) adjacent to the ground, and a bottom air inlet side edge (262) of the air channel upstream member (26) is arranged as close as possible to an air inlet side edge (222) of the base (22) such that the air inlet (122) of the air channel is as close as possible to the ground, thereby facilitating air intake.

8. The air purifier according to claim 7, **characterized in that** the bottom air inlet side edge (262) of the air channel upstream member (26) is arranged to overlap with the air inlet side edge (222) of the base (22).

9. The air purifier according to claim 5, **characterized in that** the hair collecting member (42) is pivotally mounted on the air channel upstream member (26).

10. The air purifier according to any one of claims 1 to 4 and 6 to 9, **characterized in that** movement of the hair collecting member (42) between the first position and the second position is not controlled by an electric motor. 11. The air purifier according to any one of claims 1 to 5 and 6 to 9, **characterized in that** the base body (20) further comprises a base (22) suitable to make contact with the ground, the base (22) comprises a support surface, and the air purifier is supported on the ground by means of the support surface of the base.
